# EUROPEAN PATENT APPLICATION

(11) **EP 2 257 123 A1**
(43) Date of publication of application: **01.12.2010**
(21) Application number: 09175397.0
(22) Date of filing: 09.11.2009
(51) Int. Cl.: H05B 33/08

(54) **Light emitting diode circuit**

(30) Priority: 21.05.2009 TW 98116860
(71) Applicant: Everlight Electronics Co., Ltd., Tucheng T'ai pei (TW)
(72) Inventor: Lin, Ying-Chu, Tucheng, Taipei (TW); Chou, Hsin-Yi, Tucheng, Taipei (TW)
(74) Representative: Becker Kurig Straus

(57) **Abstract**

A light emitting diode (LED) circuit is provided. A light emitting diode (LED) circuit includes an alternating current (AC) source, a rectifier, a voltage-limiting circuit, and an LED module. The AC source provides an AC voltage, and the rectifier generates a first rectified voltage according to the AC voltage. An upper limit of the first rectified voltage is substantially restricted at a rated voltage by the voltage-limiting circuit, and the voltage-limiting circuit generates a second rectified voltage according to the first rectified voltage, in which the second rectified voltage is lower than the rated voltage. The LED module receives the second rectified voltage. Thereby, when the AC voltage is unstable, fluctuation of current flowing through the LED module can be substantially reduced.

## Description

### BACKGROUND OF THE INVENTION

### Field of the Invention

The present invention generally relates to a light emitting diode (LED) circuit, and more particularly to an LED circuit that prevents drastic fluctuations of current flowing through an LED.

### Description of Related Art

Thanks to numerous advantages of long life span, miniature size, high vibration and shock resistance, economical power consumption and so on, LEDs have been widely applied to indicating lights or light sources employed in a variety of household electric appliances and instruments. In recent years, the LED has been developed towards multicolor and high brightness; therefore, its application scope has been expanded to large outdoor display boards, traffic signal lights, and the like. In the future, the LED may even become the main illumination light source with both power-saving and environment-protecting functions.

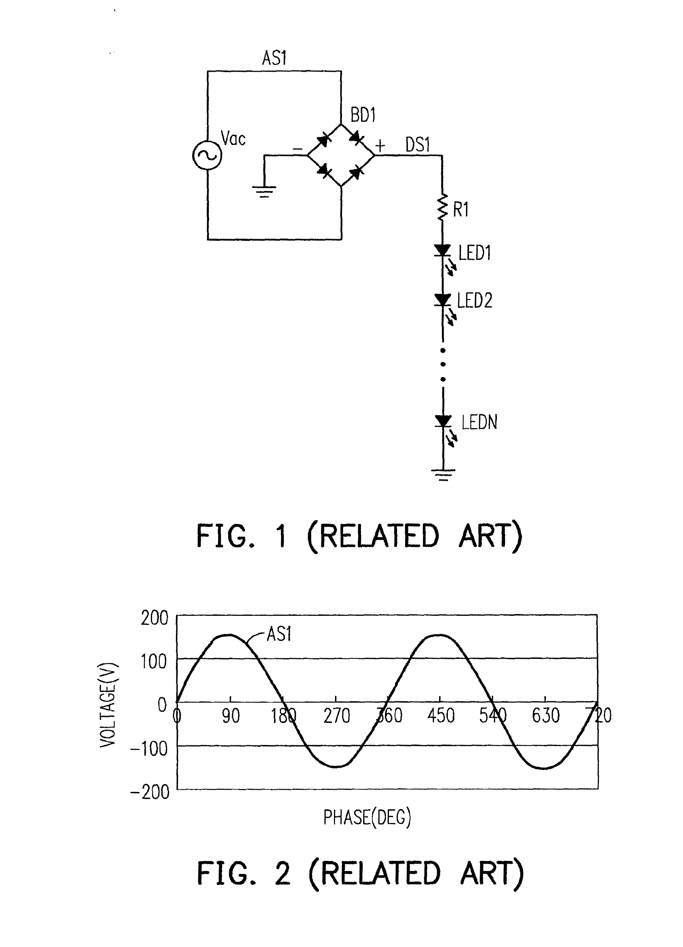

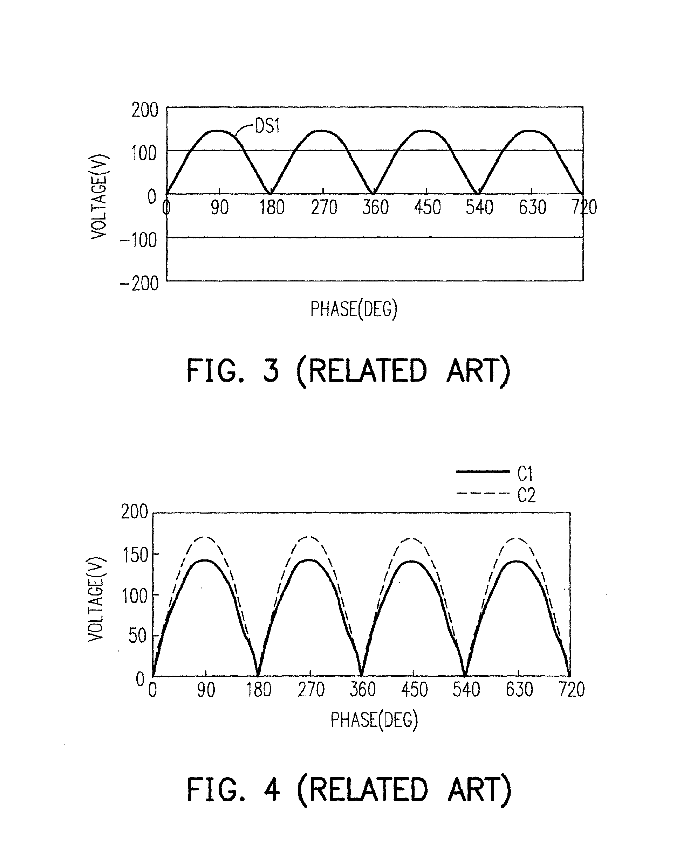

FIG. 1 is a schematic circuit diagram of a conventional LED circuit. FIG. 2 is a voltage waveform diagram of a conventional alternating current (AC) voltage. FIG. 3 is a voltage waveform diagram of a conventional rectified voltage. Referring to FIGs. 1-3, an AC source Vac can provide an AC voltage AS1 to a rectifier BD1. According to the AC voltage AS1, the rectifier BD1 can provide a rectified voltage DS1 to a plurality of LEDs such as the LEDs LED 1- LEDN. An example of a current-limiting resistor R1 is 896Ω. For example, N = 34.

It should be noted that when the AC voltage AS1 provided by the AC source Vac is unstable, a current flowing through the LEDs LED1-LEDN also undergoes drastic fluctuations, and therefore the LEDs LED1-LEDN have substantially large brightness variation and color temperature deviation. For example, ideally the AC source Vac provides an AC voltage AS1 of 110V, but practically, the AC voltage AS1 may fluctuate between 100V to 120V.

FIG. 4 is a voltage waveform diagram of a plurality of different conventional rectified AC voltages. Referring to FIG. 1 and FIG. 4, when the AC voltage AS1 fluctuates between 100V to 120V, the rectified voltage DS1 also fluctuates between curve C1 and C2 depicted in FIG. 4. Drastic fluctuations of the rectified voltage DS1 result in substantial variation in the current flowing through the LEDs LED1-LEDN. A root mean square (RMS) current variation value of the current flowing through the LEDs LED1-LEDN can be calculated as ( 26.53/15.194 ) ≒ 1.75 times. Consequently, this RMS current variation value causes substantial brightness variation and color temperature deviation for the LEDs LED1-LEDN.

**CHART 1: Laboratory Data in accordance with FIG. 1.**

| AC Voltage AS1(V) | RMS Voltage of LEDs LED1-LEDN( V) | RMS Current of LEDs LED1-LE DN(mA) | RMS Efficiency of LEDs LED1-LED N(%) |
|---|---|---|---|
| 100 | 88.854 | 15.194 | 83% |
| 110 | 94.02 | 20.73 | 80% |
| 120 | 98.72 | 26.53 | 78% |

In light of the foregoing considerations, in the LED industry, overcoming problems such as LED brightness variation and color temperature deviation necessitates substantial improvements in LED current variation and voltage stability while under a plurality of supply voltage conditions.

### SUMMARY OF THE INVENTION

The present invention provides a LED circuit that prevents drastic fluctuations of current flowing through an LED.

The present invention provides an LED circuit that includes an AC source, a rectifier, a voltage-limiting circuit, and an LED module. The AC source provides an AC voltage. The rectifier is coupled to the AC source, and the rectifier generates a first rectified voltage according to the AC voltage provided by the AC source. The voltage-limiting circuit is coupled to the rectifier, and the voltage-limiting circuit substantially restricts an upper limit of the first rectified voltage at a rated voltage. According to the first rectified voltage, the voltage-limiting circuit generates a second rectified voltage that is lower than the rated voltage. The LED module is coupled to the voltage-limiting circuit, and the LED module can receive the second rectified voltage.

In one embodiment of the present invention, the LED circuit further includes a triac dimmer. The triac dimmer is coupled between the AC source and the rectifier.

In one embodiment of the invention, the rectifier is a full-bridge rectifier.

In one embodiment of the invention, the voltage-limiting circuit includes a transistor. A collector terminal of the transistor is coupled to an output terminal of the rectifier. An emitter terminal of the transistor is coupled to an input terminal of the LED module. A base terminal of the transistor is coupled to a voltage.

In one embodiment of the present invention, the voltage-limiting circuit includes a transistor, a current-limiting resistor, and a Zener diode. The collector terminal of the transistor is coupled to the output terminal of the rectifier. The emitter terminal of the transistor is coupled to the input terminal of the LED module. A first terminal of the current-limiting resistor is coupled to the output terminal of the rectifier. A second terminal of the current-limiting resistor is coupled to the base terminal of the transistor. An anode terminal of the Zener diode is coupled to an output terminal of the LED module. A cathode terminal of the Zener diode is coupled to the base terminal of the transistor.

Furthermore, in another embodiment of the present invention, the voltage-limiting circuit can further include a variable resistor. The variable resistor is coupled between the base terminal of the transistor and the cathode terminal of the Zener diode. In another embodiment of the present invention, the voltage-limiting circuit can further include a thermistor. The thermistor is coupled between the base terminal of the transistor and the cathode terminal of the Zener diode.

In one embodiment of the present invention, the voltage-limiting circuit includes a plurality of transistors, a current-limiting resistor, and a Zener diode. A collector terminal of each of the transistors is coupled to the output terminal of the rectifier. An emitter terminal of each of the transistors is coupled to an input terminal of a plurality of sets of serially coupled LEDs in the LED module. The first terminal of the current-limiting resistor is coupled to the output terminal of the rectifier. The second terminal of the current-limiting resistor is coupled to a base terminal of each of the transistors. The anode terminal of the Zener diode is coupled to an output terminal of the each set of serially coupled LEDs. The cathode terminal of the Zener diode is coupled to the base terminal of each of the transistors.

In one embodiment of the present invention, the LED module includes a resistor and a set of serially coupled LEDs. A first terminal of the resistor is coupled to the voltage-limiting circuit. An input terminal of the set of serially coupled LEDs is coupled to a second terminal of the resistor. An output terminal of the set of serially coupled LEDs is coupled to a voltage.

In one embodiment of the present invention, the LED module includes a Zener diode and a set of serially coupled LEDs. The cathode terminal of the Zener diode is coupled to the voltage-limiting circuit. The input terminal of the set of serially coupled LEDs is coupled to the anode terminal of the Zener diode, and the output terminal of the set of serially coupled LEDs is coupled to a voltage.

In one embodiment of the present invention, the LED module includes a current regulative diode (CRD) and a set of serially coupled LEDs. An anode terminal of the CRD is coupled to the voltage-limiting circuit. The input terminal of the set of serially coupled LEDs is coupled to a cathode terminal of the CRD. The output terminal of the set of serially coupled LEDs is coupled to a voltage.

In one embodiment of the present invention, the LED module includes a variable resistor and a set of serially coupled LEDs. A first terminal of the variable resistor is coupled to the voltage-limiting circuit. The input terminal of the set of serially coupled LEDs is coupled to a second terminal of the variable resistor. The output terminal of the set of serially coupled LEDs is coupled to a voltage.

In one embodiment of the present invention, the LED module includes a thermistor and a set of serially coupled LEDs. A first terminal of the thermistor is coupled to the voltage-limiting circuit. The input terminal of the set of serially coupled LEDs is coupled to a second terminal of the thermistor. The output terminal of the set of serially coupled LEDs is coupled to a voltage.

In one embodiment of the present invention, the LED module includes a resistor, a set of serially coupled LEDs, and a field effect transistor. The first terminal of the resistor is coupled to the voltage-limiting circuit. The input terminal of the set of serially coupled LEDs is coupled to the second terminal of the resistor. A drain terminal of the field effect transistor is coupled to the output terminal of the set of serially coupled LEDs. A source terminal of the field effect transistor is coupled to a voltage. A gate terminal of the field effect transistor receives a pulse-width modulated (PWM) signal.

In summary, embodiments of the present invention can provide a voltage-limiting circuit that substantially restricts an upper limit of a voltage provided to an LED module at a rated voltage. Consequently, drastic fluctuations of current flowing through the LED module are substantially reduced. Furthermore, LED brightness variation and color temperature deviation are substantially improved.

To make the above features and advantages of the present invention more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic circuit diagram of a conventional LED circuit.

FIG. 2 is a voltage waveform diagram of a conventional AC voltage.

FIG. 3 is a voltage waveform diagram of a conventional rectified voltage.

FIG. 4 is a voltage waveform diagram of a plurality of different conventional rectified AC voltages.

FIG. 5 is a schematic circuit diagram of an LED circuit in accordance with the first embodiment of the present invention.

FIG. 6 is a voltage waveform diagram of a plurality of different rectified AC voltages in accordance with the first embodiment of the present invention.

FIG. 7 is a schematic circuit diagram of an LED circuit in accordance with the second embodiment of the present invention.

FIG. 8 is a schematic circuit diagram of an LED circuit in accordance with the third embodiment of the present invention.

FIG. 9 is a schematic circuit diagram of an LED circuit in accordance with the fourth embodiment of the present invention.

FIG. 10 is a schematic circuit diagram depicting an LED circuit in accordance with the fifth embodiment of the present invention.

FIG. 11 is a schematic circuit diagram depicting an LED circuit in accordance with the sixth embodiment of the present invention.

FIG. 12 is a schematic circuit diagram depicting an LED circuit in accordance with the seventh embodiment of the present invention.

FIG. 13 is a schematic circuit diagram depicting an LED circuit in accordance with the eighth embodiment of the present invention.

FIG. 14 is a schematic circuit diagram depicting an LED circuit in accordance with the ninth embodiment of the present invention.

FIG. 15 is a voltage waveform diagram of an AC voltage AS2 when a triac dimmer depicted in FIG. 14 is conductive for a full cycle.

FIG. 16 is a voltage waveform diagram of a rectified voltage DS4 when the triac dimmer depicted in FIG. 14 is conductive for a full cycle.

FIG. 17 is a voltage waveform diagram of the AC voltage AS2 when the triac dimmer 70 depicted in FIG. 14 is conductive for half a cycle.

FIG. 18 is a voltage waveform diagram of the rectified voltage DS4 when the triac dimmer depicted in FIG. 14 is conductive for half a cycle.

FIG. 19 is a voltage waveform diagram of the AC voltage AS2 when the triac dimmer depicted in FIG. 14 is conductive for a quarter of a cycle.

FIG. 20 is a voltage waveform diagram of the rectified voltage DS4 when the triac dimmer depicted in FIG. 14 is conductive for a quarter of a cycle.

### DESCRIPTION OF EMBODIMENTS

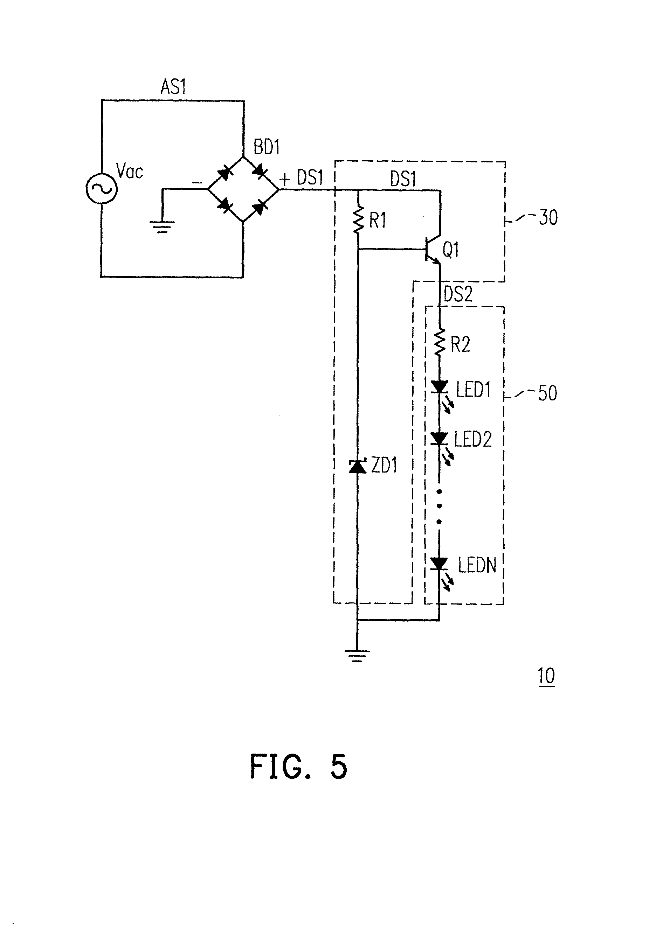

FIG. 5 is a schematic circuit diagram of an LED circuit in accordance with the first embodiment of the present invention. Referring to FIG. 5, in the present embodiment of the invention, an LED circuit 10 includes an AC source Vac, a rectifier BD1, a voltage-limiting circuit 30, and an LED module 50. The AC source Vac is coupled to the rectifier BD1, and the AC source Vac can provide an AC voltage AS1 to the rectifier BD1. The rectifier BD1 is coupled to the voltage-limiting circuit 30. The rectifier BD1 can be, for instance, a full-bridge rectifier that rectifies the AC voltage AS1 in order to provide a rectified voltage to the voltage-limiting circuit 30 that is similar to a rectified voltage DS1 depicted in FIG. 3.

It should be noted that the voltage-limiting circuit 30 is coupled to the LED module 50. The voltage-limiting circuit 30 can substantially restrict an upper limit for the rectified voltage DS1 at a rated voltage, and according to the rectified voltage DS1, the voltage-limiting circuit 30 can also provide a rectified voltage DS2 to the LED module 50 that is lower than the aforementioned rated voltage.

In the present embodiment of the invention, the voltage-limiting circuit 30 includes a current-limiting resistor R1, a transistor Q1, and a Zener diode ZD1. An example of the current-limiting resistor R1 is 10KΩ. The transistor Q1 can be a bipolar junction transistor, for example. A reverse breakdown voltage of the Zener diode ZD1 is 132V, for instance, but not limited. Therefore, the transistor Q1 can provide a rectified voltage DS2 of less than 131.3V to the LED module 50. In other words, the rated voltage for the present embodiment of the invention is 131.3V.

In the present embodiment of the invention, the LED module 50 can include a current-limiting resistor R2 and the LEDs LED1-LEDN, in which the LEDs LED1-LEDN form a set of serially coupled LEDs. The current-limiting resistor R2 is for instance 218Ω. For instance, N = 34, although it should be noted that other embodiments of the present invention are not limited thereto, and thus the LEDs LED1-LEDN can be other quantities not described herein.

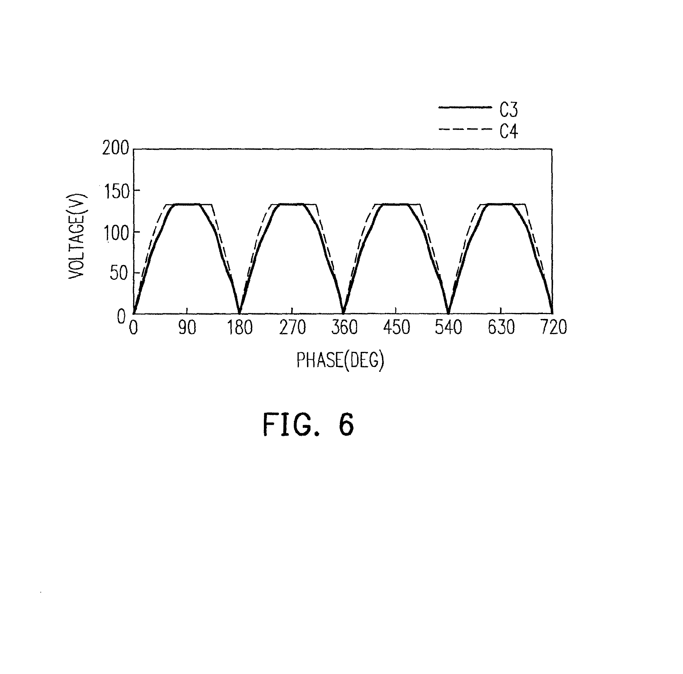

FIG. 6 is a voltage waveform diagram of a plurality of different rectified AC voltages in accordance with the first embodiment of the present invention. Referring to FIG. 5 and FIG. 6, when the AC voltage AS1 fluctuates between 100V to 120V, the rectified voltage DS2 vary between curve C3 and curve C4 depicted in FIG. 6. As shown in Chart 2 below, when the AC voltage AS1 fluctuates between 100V to 120V, a RMS current variation value of current flowing through the LEDs LED1-LEDN is around (27.28/22.1) or 1.26 times, which is substantially smaller than the value found in Chart 1. It should be noted that in the embodiments of the present invention, the lower the reverse breakdown voltage of the Zener diode ZD1, the smaller the current varies when the input voltage AS1 changes. However, the Zener diode ZD1 having a substantially small reverse breakdown voltage may cause a substantially large energy loss, so the choice between current variation and energy loss can be weighed accordingly.

**CHART 5: Laboratory Data in accordance with FIG. 5.**

| AC Voltage AS1(V) | RMS Voltage of LEDs LED1-LED N(V) | RMS Current of LEDs LED1-LED N(mA) | RMS Efficiency of LEDs LED1-LED N(%) |
|---|---|---|---|
| 100 | 93.15 | 22.1 | 89% |
| 110 | 96.96 | 25.35 | 83% |
| 120 | 99.86 | 27.78 | 76% |

Persons skilled in the art should know that LED brightness and current flowing through the LED are directly related. In the present embodiment of the invention, when the AC voltage AS1 fluctuates between 100V to 120V, the RMS current variation value of a current flowing through the LEDs LED1-LEDN is around 1.26 times. Compared with conventional techniques, the present embodiment of the invention substantially improves upon problems such as LED brightness variation and color temperature deviation.

Although the aforementioned embodiment has disclosed a possible type of an LED circuit, persons of ordinary skill in the art realize that different manufacturers may develop different designs of LED circuits, and the application of the present invention should not be limited to this type only. In other words, as long as the voltage-limiting circuit limits a voltage provided to an LED module at the rated voltage, these implementations do not depart from the spirit of the present invention. Some other embodiments are further discussed hereinafter to allow persons of ordinary skill in the art to comprehend and embody the present invention.

In the aforementioned embodiment of the present invention, although the current-limiting resistors R1 and R2 and the Zener diode ZD1 can each be implemented with a single component, the present invention is not limited thereto. In other embodiments of the present invention, the current-limiting resistors R1 and R2 and the Zener diode ZD1 can be implemented with a plurality of components coupled in series or in parallel. Although the rectifier BD1 is exemplified as a full-bridge rectifier, the present invention is not limited thereto. In other embodiments of the present invention, the rectifier BD1 can be implemented in alternate means. For example, the rectifier BD1 can be implemented with a half-bridge rectifier in combination with a capacitor. Even though the current-limiting resistor R1 is exemplified as 10KΩ, and the current-limiting resistor R2 is exemplified as 218Ω, but nevertheless, the present invention should not be construed as limited to the embodiments set forth herein. In other embodiments of the present invention, current-limiting resistors of different resistance values can be implemented to replace the current-limiting resistors R1 and R2.

In addition, although the rated voltage is set at 131.3V as an illustrative example, the present invention is not limited thereto. In other embodiments of the present invention, persons skilled in the art can alter the rated voltage as they see fit. For example, the reverse breakdown voltage of the Zener diode ZD1 can be changed in order to vary the rated voltage. Another example can be changing a reference voltage provided to a base terminal of the transistor Q1 in order to vary the rated voltage.

More specifically, in the first embodiment of the present invention, the voltage-limiting circuit 30 and the LED module 50 depicted in FIG. 5 represent only an exemplary embodiment, and the present invention is not limited thereto. In other embodiments of the present invention, persons skilled in the art can alter the implementations of the voltage-limiting circuit 30 and the LED module 50 as they see fit.

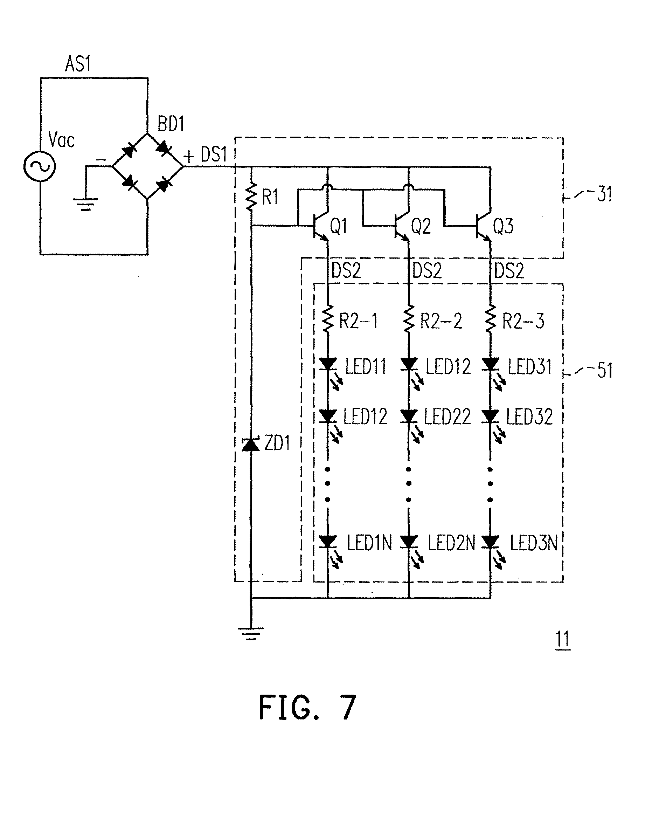

For instance, FIG. 7 is a schematic circuit diagram of an LED circuit in accordance with the second embodiment of the present invention. Referring now to FIG. 5 and FIG. 7, an LED circuit 11 is similar to the LED circuit 10. The differences between the two circuits reside in that LED circuit 11 has a structure having a plurality of parallel components, including a voltage-limiting circuit 31 and an LED module 51. In the present embodiment of the invention, the voltage-limiting circuit 31 can include the current-limiting resistor R1, the Zener diode ZD1, and a plurality of transistors such as transistors Q1 to Q3 in the present embodiment. The LED module 51 can include a plurality of sets of serially coupled LEDs, such as three sets of serially coupled LEDs in the present embodiment of the invention. The first set of serially coupled LEDs can be formed by a current-limiting resistor R2-1 and the LEDs LED11-LED1N. The second set of serially coupled LEDs can be formed by a current-limiting resistor R2-2 and the LEDs LED21-LED2N. The third set of serially coupled LEDs can be formed by a current-limiting resistor R2-3 and the LEDs LED31-LED3N. Therefore, a similar effect of the first embodiment is substantially achieved.

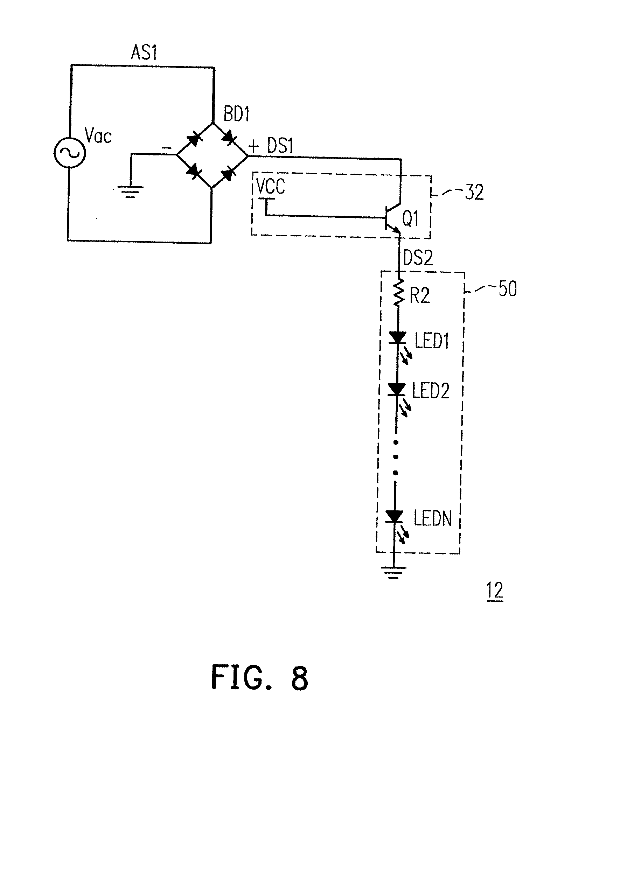

FIG. 8 is a schematic circuit diagram of an LED circuit in accordance with the third embodiment of the present invention. Referring now to FIG. 5 and FIG. 8, an LED circuit 12 is similar to the LED circuit 10. The differences between the two circuits reside in a voltage-limiting circuit 32 of the LED circuit 12. In the present embodiment of the invention, the voltage-limiting circuit 32 can include a transistor Q1 that is coupled between the rectifier BD1 and the LED module 50. The base terminal of the transistor Q1 is coupled to a reference voltage VCC. In addition, the brightness of the LEDs LED1-LEDN can be adjusted according to variations of the reference voltage VCC.

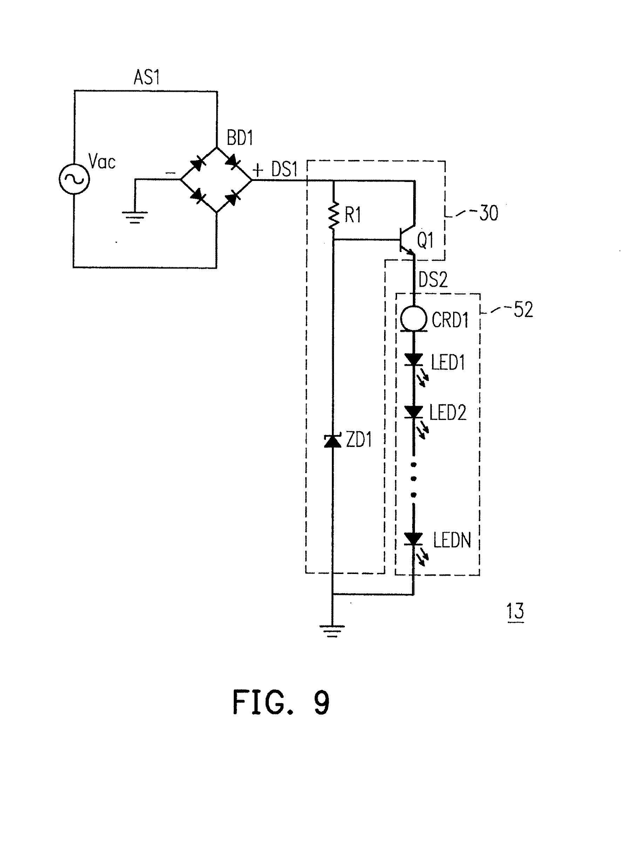

FIG. 9 is a schematic circuit diagram of an LED circuit in accordance with the fourth embodiment of the present invention. Referring now to FIG. 5 and FIG. 9, an LED circuit 13 is similar to the LED circuit 10. The differences in the two circuits reside in an LED module 52. In the present embodiment of the invention, the LED module 52 includes a current regulative diode (CRD) CRD1 and the LEDs LED1-LEDN. CRD CRD1 can replace current-limiting resistors. In other embodiments of the present invention, a plurality of CRDs can be implemented in a series or parallel configuration in order to maintain the current of the LED module 52 under a predetermined current level. The Zener diode ZD1 can limit the voltage at a predetermined suitable range so that the voltage swing across the CRD is not too large so as to cause component burn out.

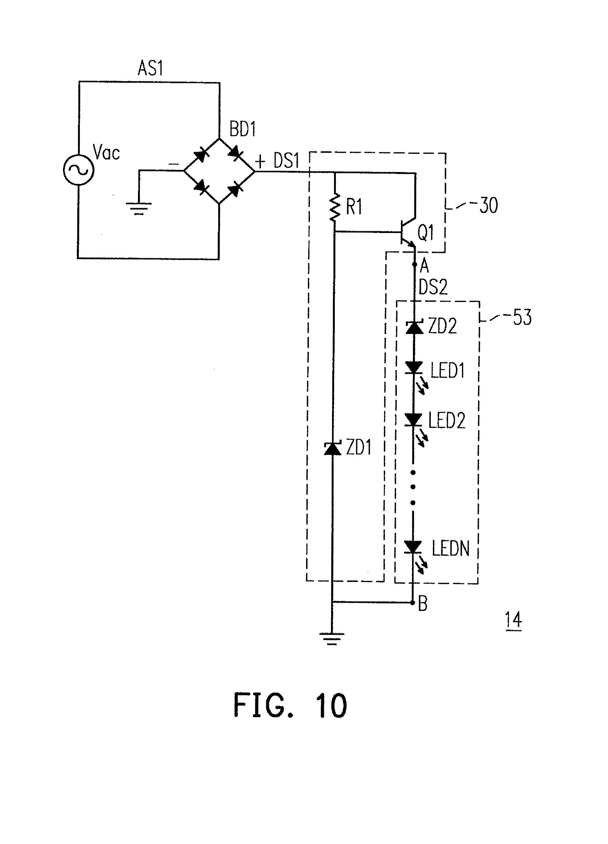

FIG. 10 is a schematic circuit diagram of an LED circuit in accordance with the fifth embodiment of the present invention. Referring now to FIG. 5 and FIG. 10, an LED circuit 14 is similar to the LED circuit 10. The differences in the two circuits reside in an LED module 53. In the present embodiment of the invention, the LED module 53 includes a Zener diode ZD2 and the LEDs LED1-LEDN. The Zener diode ZD2 can replace current-limiting resistors. If resistor R2 is replaced by the Zener diode ZD2, the Zener diode ZD2 can absorb leftover voltage swings on points A and B to prevent the LED module 53 from suffering component burn out.

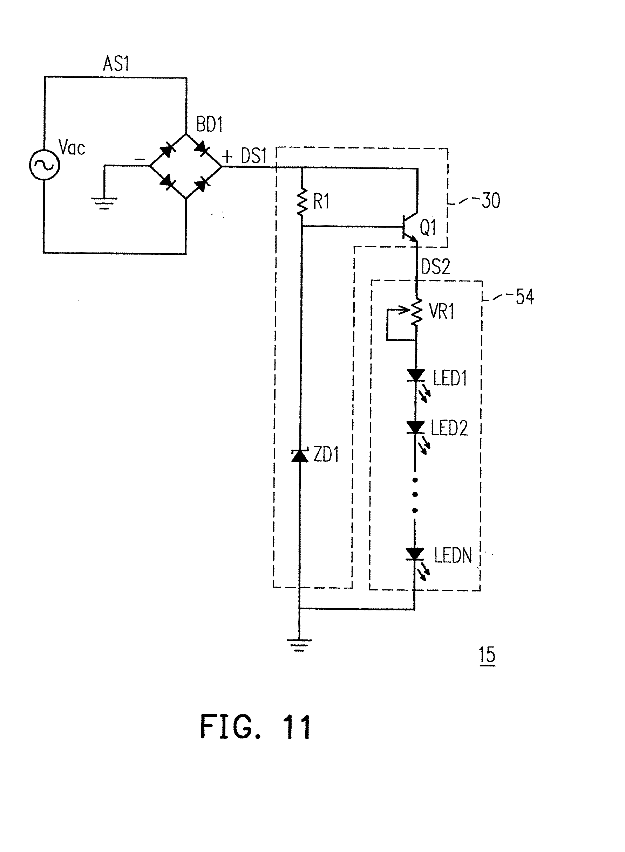

FIG. 11 is a schematic circuit diagram of an LED circuit in accordance with the sixth embodiment of the present invention. Referring now to FIG. 5 and FIG. 11, an LED circuit 15 is similar to the LED circuit 10. The differences in the two circuits reside in an LED module 54. In the present embodiment of the invention, the LED module 54 includes a variable resistor VR1 and the LEDs LED1-LEDN. Variable resistor VR1 can be used as a current-limiting resistor. In addition, by adjusting the variable resistor VR1, the brightness of the LEDs LED1-LEDN can be changed. Therefore, the present embodiment not only achieves a similar effect of the first embodiment of the present invention, but the present embodiment also adds a capability of adjusting the brightness of the LEDs LED1-LEDN.

It should be noted that in another embodiment of the present invention, the variable resistor VR1 depicted in FIG. 11 can also be replaced by a thermistor. Therefore, the present embodiment not only achieves a similar effect of the first embodiment of the present invention, but the present embodiment also adds a capability of adjusting the brightness of the LEDs LED1-LEDN according to an environmental temperature.

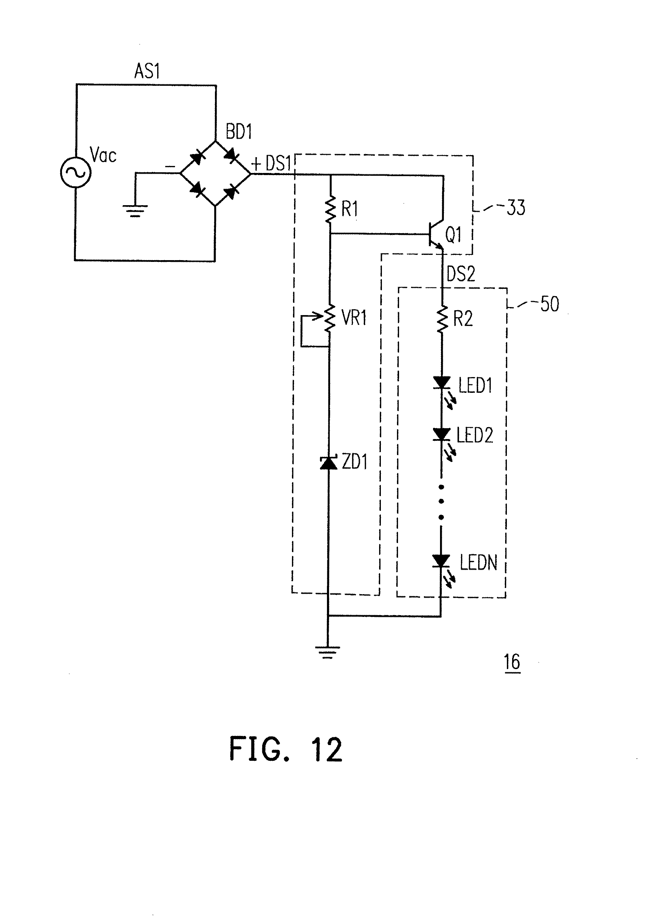

FIG. 12 is a schematic circuit diagram of an LED circuit in accordance with the seventh embodiment of the present invention. Referring now to FIG. 5 and FIG. 12, an LED circuit 16 is similar to the LED circuit 10. The differences between the two circuits reside in a voltage-limiting circuit 33. In the present embodiment of the invention, the voltage-limiting circuit 33 includes the variable resistor VR1, the current-limiting resistor R1, the transistor Q1, and the Zener diode ZD1. By adjusting the variable resistor VR1, the voltage at the base terminal of the transistor Q1 can be changed accordingly, and therefore the brightness of the LEDs LED1-LEDN can be adjusted. Therefore, the present embodiment not only achieves a similar effect of the first embodiment of the present invention, but the present embodiment also adds a capability of adjusting the brightness of the LEDs LED1-LEDN.

It should be noted that in another embodiment of the present invention, the variable resistor VR1 depicted in FIG. 12 can also be replaced by a thermistor. Therefore, the present embodiment not only achieves a similar effect of the first embodiment of the present invention, but the present embodiment also adds a capability of adjusting the brightness of the LEDs LED1-LEDN according to an environmental temperature.

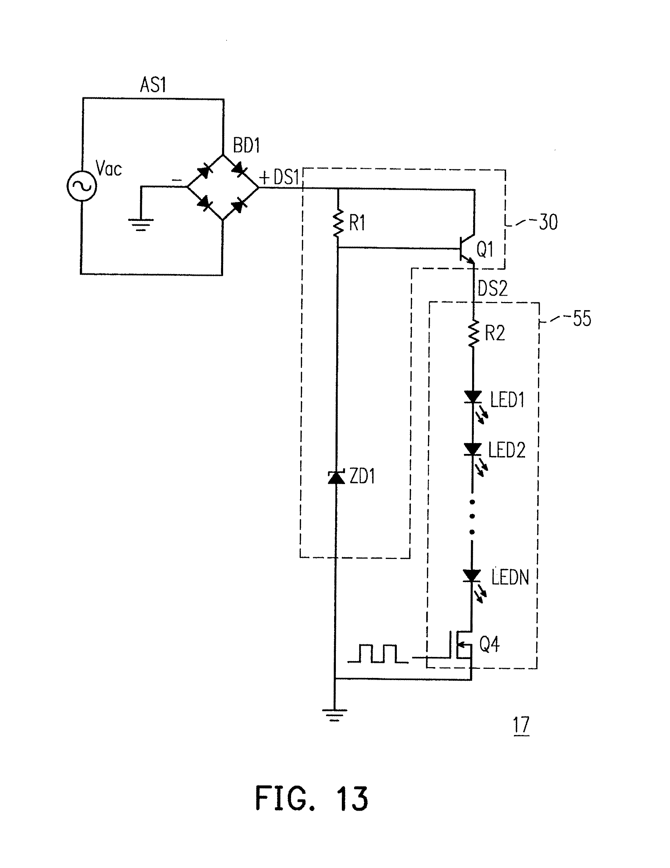

FIG. 13 is a schematic circuit diagram of an LED circuit in accordance with the eighth embodiment of the present invention. Referring now to FIG. 5 and FIG. 13, an LED circuit 17 is similar to the LED circuit 10. The differences in the two circuits reside in an LED module 55. In the present embodiment of the invention, the LED module 55 includes a transistor Q4, a current-limiting resistor R2, and the LEDs LED1-LEDN. A gate terminal of the transistor Q4 can receive a pulse-width modulated (PWM) signal. The brightness of the LEDs LED1-LEDN can be adjusted according to changes in the cycle of the PWM signal. Therefore, the present embodiment not only achieves a similar effect of the first embodiment of the present invention, but the present embodiment also adds a capability of adjusting the brightness of the LEDs LED1-LEDN.

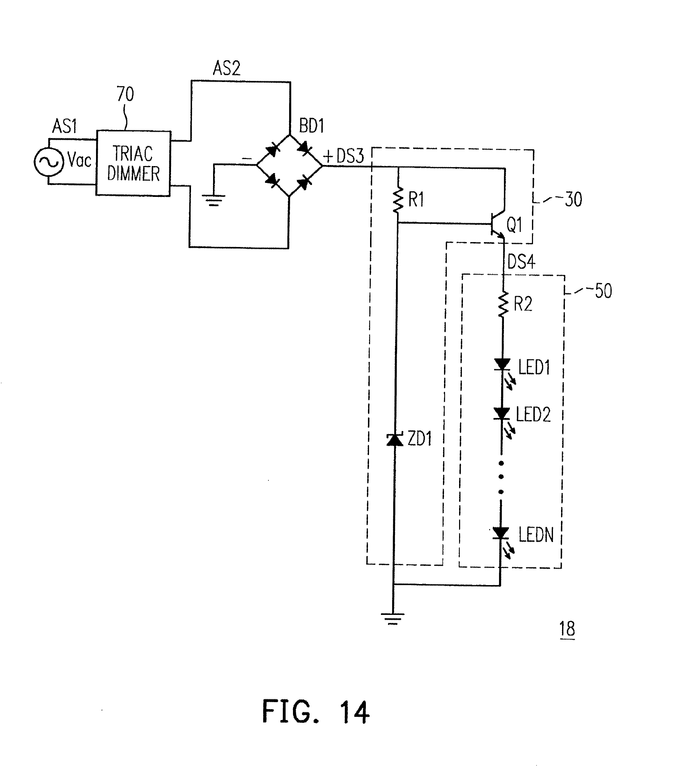

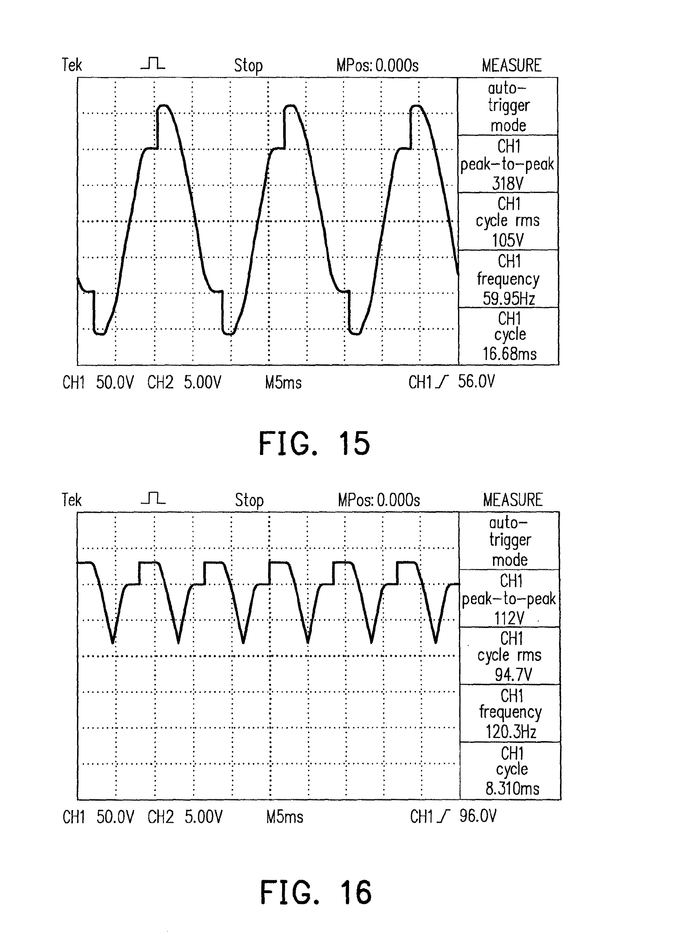

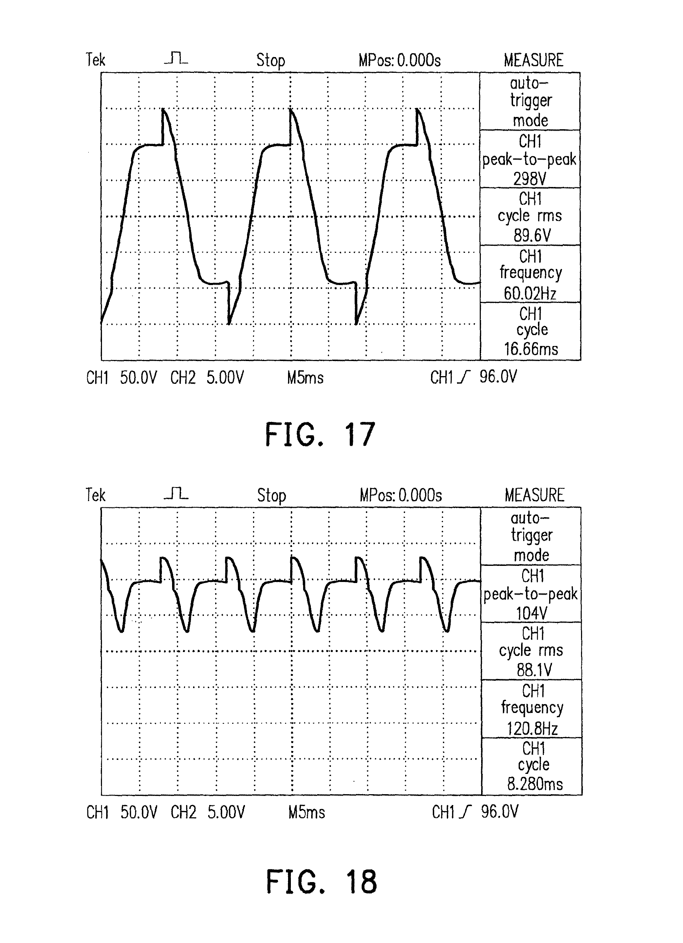

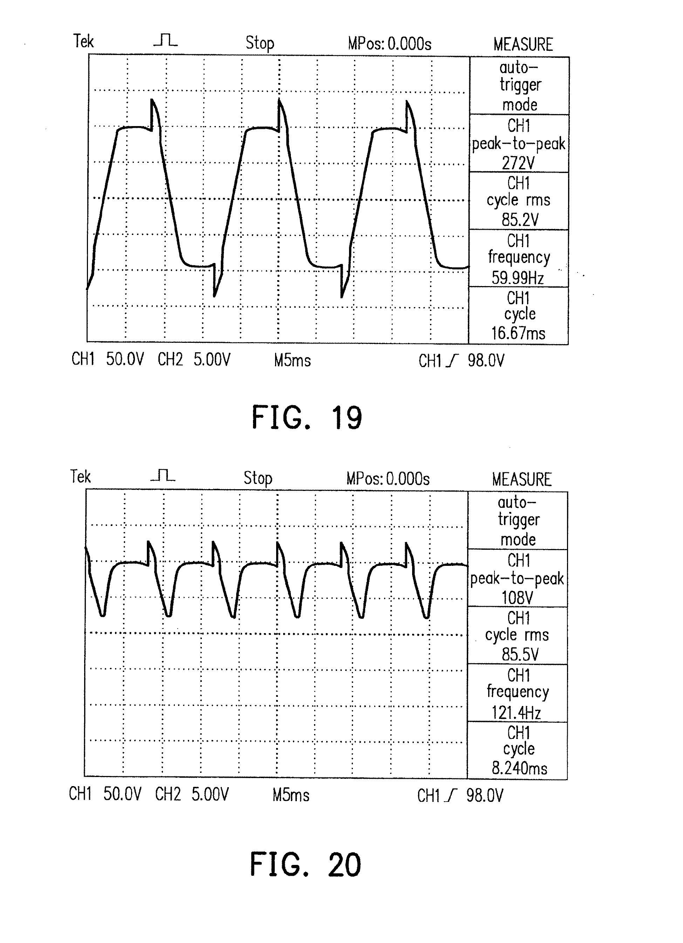

FIG. 14 is a schematic circuit diagram of an LED circuit in accordance with the ninth embodiment of the present invention. Referring now to FIG. 5 and FIG. 14, an LED circuit 18 is similar to the LED circuit 10. The differences between the two circuits reside in that the LED circuit 18 further includes a triac dimmer 70. The triac dimmer 70 is coupled between the AC source Vac and the rectifier BD1. Therefore, the present embodiment of the invention can provide adjustments to the brightness of the LEDs LED1-LEDN. FIG. 15 is a voltage waveform diagram of the AC voltage AS2 when the triac dimmer 70 depicted in FIG. 14 is conductive for a full cycle. FIG. 16 is a voltage waveform diagram of a rectified voltage DS4 when the triac dimmer 70 depicted in FIG. 14 is conductive for a full cycle. FIG. 17 is a voltage waveform diagram of the AC voltage AS2 when the triac dimmer 70 depicted in FIG. 14 is conductive for half a cycle. FIG. 18 is a voltage waveform diagram of the rectified voltage DS4 when the triac dimmer 70 depicted in FIG. 14 is conductive for half a cycle. FIG. 19 is a voltage waveform diagram of the AC voltage AS2 when the triac dimmer 70 depicted in FIG. 14 is conductive for a quarter of a cycle. FIG. 20 is a voltage waveform diagram of the rectified voltage DS4 when the triac dimmer 70 depicted in FIG. 14 is conductive for a quarter of a cycle.

Comparing the voltage waveform diagrams from FIG. 15 to FIG. 20, the figures show that the AC voltage AS2 is adjusted by varying the triac dimmer 70 from conducting in a full cycle to conducting in a quarter cycle. Therefore, the present embodiment of the invention uses the triac dimmer 70 to make adjustments to the AC voltage AS2 in order to vary the brightness of the LEDs LED1-LEDN.

According to the above descriptions, embodiments of the present invention can implement a voltage-limiting circuit to substantially restrict an upper limit of a voltage provided to an LED module at a rated voltage, and thereby preventing drastic fluctuations of current flowing through the LED modules. Embodiments of the present invention can also include the following features:
1. A variable resistor can be added to the voltage-limiting circuit or the LED module in order to adjust the LED brightness.
2. A thermistor can be added to the voltage-limiting circuit or the LED module in order to adjust the LED brightness.
3. A transistor can be added to the LED module in order to adjust the LED brightness according to a PWM signal.
4. A triac dimmer can be added in an LED circuit in order to adjust the LED brightness.
5. A transistor can be added to the LED module, and the base terminal of the transistor can be coupled to a reference voltage in order to adjust the LED brightness according to the changes in the reference voltage.

Although the present invention has been described with reference to the above embodiments, it will be apparent to one of ordinary skill in the art that modifications to the described embodiments may be made without departing from the spirit of the invention. Accordingly, the scope of the invention will be defined by the attached claims and not by the above detailed descriptions.

## Claims

1. A light emitting diode (LED) circuit, comprising:
an alternating current (AC) source, being configured to providing an AC voltage;
a rectifier, being coupled to the AC source, for generating a first rectified voltage according to the AC voltage;
a voltage-limiting circuit, being coupled to the rectifier, for restricting an upper limit of the first rectified voltage at a rated voltage to generate a second rectified voltage, wherein the second rectified voltage is lower than the rated voltage; and
an LED module, being coupled to the voltage-limiting circuit, for receiving the second rectified voltage.

2. The LED circuit as claimed in claim 1, further comprising:
a triac dimmer, being coupled between the AC source and the rectifier.

3. The LED circuit as claimed in claim 1, wherein the rectifier is a full-bridge rectifier.

4. The LED circuit as claimed in claim 1, wherein the voltage-limiting circuit comprises:
a transistor, having a collector terminal, an emitter terminal and a base terminal, the collector terminal being coupled to an output terminal of the rectifier, the emitter terminal being coupled to an input terminal of the LED module, and the base terminal being coupled to a voltage.

5. The LED circuit as claimed in claim 1, wherein the voltage-limiting circuit comprises:
a transistor, having a collector terminal , an emitter terminal and a base terminal, the collector terminal being coupled to an output terminal of the rectifier and the emitter terminal being coupled to an input terminal of the LED module;
a current-limiting resistor, having a first terminal being coupled to an output terminal of the rectifier and a second terminal being coupled to the base terminal of the transistor; and
a Zener diode, having an anode terminal being coupled to an output terminal of the LED module and a cathode terminal coupled to the base terminal of the transistor.

6. The LED circuit as claimed in claim 5, wherein the voltage-limiting circuit further comprises:
a variable resistor, being coupled between the base terminal of the transistor and the cathode terminal of the Zener diode.

7. The LED circuit as claimed in claim 5, wherein the voltage-limiting circuit further comprises:
a thermistor, being coupled between the base terminal of the transistor and the cathode terminal of the Zener diode.

8. The LED circuit as claimed in claim 1, wherein the voltage-limiting circuit comprises:
a plurality of transistors, wherein each of the transistors has a collector terminal, an emitter terminal and a base terminal, the collector terminal being coupled to an output terminal of the rectifier, and the emitter terminal of each of the transistors being coupled to an input terminal of a plurality of sets of serially coupled LEDs in the LED module;
a current-limiting resistor, having a first terminal being coupled to an output terminal of the rectifier and a second terminal being coupled to a base terminal of each of the transistors; and
a Zener diode, having an anode terminal being coupled to an output terminal of each of the set of serially coupled LEDs, the Zener diode has a cathode terminal being coupled to the base terminal of each of the transistors.

9. The LED circuit as claimed in claim 1, wherein the LED module comprises:
a resistor, having a first terminal being coupled to the voltage-limiting circuit; and
a set of serially coupled LEDs, having an input terminal and an output terminal, the input terminal being coupled to a second terminal of the resistor and the output terminal being coupled to a voltage.

10. The LED circuit as claimed in claim 1, wherein the LED module comprises:
a Zener diode, having a cathode terminal being coupled to the voltage-limiting circuit; and
a set of serially coupled LEDs, having an input terminal and an output terminal, the input terminal being coupled to an anode terminal of the Zener diode and the output terminal being coupled to a voltage.

11. The LED circuit as claimed in claim 1, wherein the LED module comprises:
a current regulative diode (CRD), having an anode terminal coupled to the voltage-limiting circuit; and
a set of serially coupled LEDs, having an input terminal and an output terminal, the input terminal being coupled to a cathode terminal of the CRD and the output terminal coupled to a voltage.

12. The LED circuit as claimed in claim 1, wherein the LED module comprises:
a variable resistor, having a first terminal coupled to the voltage-limiting circuit;
and
a set of serially coupled LEDs, having an input terminal and an output terminal, the input terminal being coupled to a second terminal of the variable resistor and the output terminal coupled to a voltage.

13. The LED circuit as claimed in claim 1, wherein the LED module comprises:
a thermistor, having a first terminal coupled to the voltage-limiting circuit; and
a set of serially coupled LEDs, having an input terminal and an output terminal, the input terminal being coupled to a second terminal of the thermistor and the output terminal coupled to a voltage.

14. The LED circuit as claimed in claim 1, wherein the LED module comprises:
a resistor, having a first terminal coupled to the voltage-limiting circuit; and
a set of serially coupled LEDs, having an input terminal and an output terminal, the input terminal being coupled to a second terminal of the resistor; and
a field effect transistor, having a drain terminal coupled to the output terminal of the set of serially coupled LEDs, a source terminal coupled to a voltage, and a gate terminal that receives a pulse-width modulated signal.
